# FASCICULE DE BREVET EUROPEEN

(11) **EP 2 367 024 B1**
(45) Date de publication et mention de la délivrance du brevet: **07.11.2012**
(21) Numéro de dépôt: 11156529.7
(22) Date de dépôt: 02.03.2011
(51) Int. Cl.: G01S 19/20

(54) **Procédé et système de calcul pour l'évaluation de la performance en précision d'un système de navigation par satellite**
Berechnungsverfahren und -system zur Einschätzung der Präzisionsleistung eines satellitengesteuerten Navigationssystems
Calculation method and system for assessing the precision performance of a satellite navigation system

(30) Priorité: 12.03.2010 FR 1000997
(43) Date de publication de la demande: 21.09.2011
(73) Titulaire: Thales, 92200 Neuilly Sur Seine (FR)
(72) Inventeur: Levy, Jean-Christophe, 31130 Balma (FR)
(74) Mandataire: Esselin, Sophie

(56) Documents cités:
- WO-A1-2009/112483
- US-B1- 6 847 893
- BORIANA VASSILEVA ET AL: "SBAS Vertical Protection Level Assessment in the Case of Error Reduction", MODERN COMPUTING, 2006. JVA '06. IEEE JOHN VINCENT ATANASOFF 2006 INTERNATIONAL SYMPOSIUM ON, IEEE, PI, 1 octobre 2006 (2006-10-01), pages 137-142, XP031035961, ISBN: 978-0-7695-2643-0
- MILNER, C.D.: "Weighted RAIM for APV: An Optimised Protection Level", PROCEEDINGS OF THE 22ND INTERNATIONAL TECHNICAL MEETING OF THE SATELLITE DIVISION OF THE INSTITUTE OF NAVIGATION (ION GNSS 2009), 25 septembre 2009 (2009-09-25), pages 1645-1651, XP002611051, Savannah, GA
- ROTURIER B ET AL: "LE CONCEPT DE <<SBAS INTEGRITY>> NORMALISE PAR L'OACI - APPLICATION A EGNOS", NAVIGATION, PARIS, FR, vol. 49, no. 196, 1 octobre 2001 (2001-10-01), pages 65-77, XP008068617, ISSN: 0028-1530

## Description

L'invention concerne le domaine des systèmes de navigation par satellite et plus particulièrement un procédé de calcul des évènements de faible probabilité pour l'évaluation de la performance de précision d'un tel système.

Actuellement, les services commerciaux exploitant les systèmes de navigation par satellite se développent considérablement. Les produits fonctionnant à partir de signaux de radiolocalisation se sont largement démocratisés dans le quotidien des foyers au sein des véhicules automobiles pour l'aide à la navigation routière dans un premier temps et ces derniers temps au sein des dispositifs de téléphonie mobile pour une multitude de services à la personne. Les évolutions des futurs systèmes de positionnement par satellite, par exemple le système européen GALILEO, promettent des performances bien supérieures aux systèmes actuels. Ainsi de nouveaux services qui ne pouvaient pas être envisagés faute de fiabilité et de précision de positionnement suffisante peuvent aujourd'hui voir le jour pour les entreprises, notamment les entreprises du transport routier et du transport aérien. Par exemple, pour le transport routier, on recherche à transformer les modèles économiques des services d'exploitation des sections routières payantes en offrant des offres personnalisées au client. Pour les compagnies de transport aérien, les performances accrues en fiabilité et précision de positionnement permettent d'intégrer au sein des aéronefs des dispositifs de navigation sur lesquels les pilotes pourront se reposer entièrement. Ces dispositifs permettront d'améliorer considérablement la sécurité du transport aérien. Cependant, pour les services dont dépend la sécurité des personnes, il est obligatoire de prouver la fiabilité des données transmises par le système de navigation. C'est pourquoi les autorités soumettent les opérateurs des systèmes de navigation par satellite à des exigences de service garanti au client terminal.

Les systèmes de navigation par satellite se caractérisent par les données de performance d'intégrité, de précision et de couverture. L'intégrité est une mesure de confiance en l'information fournie par le système de navigation par satellite. Un outil bien connu pour déterminer l'intégrité d'un point fourni est le diagramme de Stanford. Le diagramme de Stanford est une matrice en deux dimensions dont le paramètre d'entrée sur l'axe horizontal est l'erreur de position observée en vertical ou horizontal et dont le paramètre d'entrée sur l'axe vertical est le niveau de protection en vertical ou horizontal calculé à partir de modèles statistiques. Ce diagramme permet de vérifier la proportion d'échantillons mesurés dont l'erreur de position observée est plus faible que le niveau de protection.

La précision d'une position est définie par l'erreur de position estimée par rapport à la position réelle. La précision de la localisation dépend notamment de l'erreur de la distance estimée entre l'utilisateur et les satellites reçus ainsi que de la configuration de la géométrie des mesures. Il existe une valeur indicative des conditions de géométrie des mesures communément appelée DOP pour « Dilution of Precision » en langage anglo-saxon. Lorsque la valeur du DOP est élevée, cela indique que les satellites utilisés pour obtenir la position sont proches et donc que la géométrie est mauvaise et lorsque la valeur du DOP est faible cela indique que les satellites utilisés pour obtenir la position sont éloignés et donc que la géométrie est bonne.

Les organismes chargés des règlementations et des contrôles concernant l'aviation civile exigent des niveaux de performances rigoureux notamment en performance de précision pour les services critiques. Parmi ces services critiques exploitant les données de géo-localisation des systèmes de navigation par satellite, le service LPV200 (« Localizer Performance with Vertical Guidance ») exigeait auparavant que le système de navigation par satellite montre pendant au moins 95% du temps une erreur de localisation en vertical inférieure à 4 mètres et en horizontal inférieure à 16 mètres. Dans le futur, on exige des opérateurs de prouver que le système de navigation par satellite prouve à l'utilisateur une probabilité d'apparition d'une erreur de localisation en vertical supérieur à 10 mètres inférieure à 10⁻⁷ en condition normale et une probabilité d'apparition d'une erreur de localisation supérieure à 15 mètres inférieure à 10⁻⁵ en condition dégradée. Ce service définit le niveau d'alerte en vertical à 35 mètres et en horizontal à 40 mètres.

On sait que les systèmes satellitaires augmentés sont capables de respecter les spécifications requises pour des événements de très faible probabilité. Ces vérifications ont été effectuées au travers de procédés lourds et fastidieux durant les phases de développement. Selon les techniques actuelles, elles demanderaient de réaliser des mesures dont la durée de test atteindrait un temps excessivement long (ie. plusieurs dizaines d'années). En effet, pour réaliser des mesures de marges d'intégrité, la statistique inférentielle classique cherche à modéliser le comportement d'une variable aléatoire sur le domaine observable des réalisations. Pour obtenir des statistiques pertinentes, il est nécessaire de récupérer des données suffisamment dé-corrélées pour ne pas mesurer des informations redondantes. On estime qu'il est nécessaire de réaliser des échantillonnages avec une période d'environ 5 minutes entre chaque mesure. Or, étant donné la faible probabilité des événements qu'on cherche à détecter, cela impliquerait de récolter des milliards d'échantillons sur des milliers d'années de mesures.

La demanderesse a divulgué dans la demande de brevet antérieure WO/2009/112483 un dispositif fournissant les moyens d'estimer une indication d'intégrité d'un système de navigation par satellite permettant de modéliser la distribution des erreurs de localisation de très faible probabilité à partir de la théorie des valeurs extrêmes. Cependant, actuellement il n'existe pas d'outil de mesure de la précision permettant de certifier à l'utilisateur des niveaux d'exigence à de faibles probabilités d'apparition car la performance de précision dépend également de la géométrie satellitaire et les données collectées ne prennent pas en compte tous les cas de géométrie satellitaire pour chaque utilisateur.

Dans l'article de B. Vassileva et al. « SBAS Vertical Protection Level Assessment in the case of Error Reduction », Modem Computing, 2006. JVA '06. IEEE John Vincnet Atanasoff 2006 International Symposium On, IEEE, PI, 1 octobre 2006, pages 137-142, XP031035961, ISBN:978-0-7695-2643-0, un procédé de vérification de la performance de précision en localisation d'un système de navigation par satellite comprenant un segment spatial émettant des signaux de radiolocalisation vers un segment récepteur est décrit. Le procédé comporte une étape de mesure de l'erreur estimée de localisation d'un récepteur (PE) du système pour une pluralité d'échantillons et de calcul du seuil d'erreur maximum de localisation, appelé rayon de protection (PL). Le procédé de Vassileva compare la probabilité d'apparition de certaines des conditions

antérieures avec un seuil de tolérance pour vérifier la performance en précision du système de navigation par satellite. Il reste cependant une possibilité d'amélioration de l'évaluation de la marge d'intégrité pour des applications aéronautiques. La présente invention répond à ce besoin.

Un objectif de l'invention est de garantir les performances en précision d'un système de navigation par satellite prenant en compte toutes les situations de géométrie satellitaire pour un utilisateur et de garantir à un utilisateur une très faible probabilité d'apparition d'une erreur de localisation supérieure aux exigences imposées aux opérateurs.

Plus précisément, l'invention concerne un procédé de calcul des événements de faible probabilité pour l'évaluation de la performance en précision d'un système de navigation par satellite comprenant un segment spatial émettant des signaux de radiolocalisation vers un segment récepteur, caractérisé en ce qu'il comporte les étapes suivantes. Avantageusement, il comporte les étapes suivantes :
- Une étape préalable de mesure de l'erreur estimée de localisation d'un récepteur du système pour une pluralité d'échantillons et de calcul du seuil d'erreur maximum de localisation, appelé rayon de protection, pouvant être garanti par le système pour les dits échantillons, l'erreur estimée et le rayon de protection étant définis dans une dimension d'un repère de position,
- Une étape de calcul d'une première proportion d'une distribution d'échantillons vérifiant les conditions suivantes :
   i. Le rayon de protection est inférieur à un seuil d'alerte,
   ii. Le quotient du rayon de protection et de l'erreur estimée de localisation est supérieur à un quotient de sécurité, le quotient de sécurité étant le rapport entre le seuil d'alerte et un niveau d'exigence d'erreur estimée.
- Une étape de calcul d'une seconde proportion de la distribution d'échantillons vérifiant les conditions suivantes :
   i. Le rayon de protection est inférieur au seuil d'alerte,
   ii. Le quotient du rayon de protection et de l'erreur estimée de localisation est inférieur au quotient de sécurité,
   iii. L'erreur estimée de localisation est inférieure au niveau d'exigence d'erreur estimée.
- Une étape de calcul de la probabilité de la distribution des échantillons pour lesquels le quotient du rayon de protection et de l'erreur estimée de localisation (XPL/XNSE) est égal au quotient de sécurité (J/K).
- Une étape de modélisation d'au moins une composante de la distribution des échantillons, la composante représentant des échantillons de faible probabilité d'apparition de la distribution et la modélisation étant calculée par application de la théorie des valeurs extrêmes à partir des dits échantillons observés de la distribution.

>

Selon une variante préférentielle, pour vérifier les performances en précision, il comporte une étape de calcul d'une part de la probabilité d'obtenir un échantillon pour lequel le quotient du rayon de protection et de l'erreur estimée de localisation soit inférieur au quotient de sécurité et d'autre part, pour cet échantillon, de la probabilité que le rayon de protection soit inférieur au seuil d'alerte et que l'erreur estimée de localisation soit supérieure au niveau d'exigence d'erreur estimée.

L'invention concerne également un système de calcul des évènements de faible probabilité pour l'évaluation de la performance en précision d'un système de navigation par satellite apte à mettre en oeuvre le procédé selon l'une quelconque des variantes précédentes.

Grâce aux caractéristiques du procédé et du système selon les variantes décrites précédemment, il est possible d'évaluer la probabilité d'apparition des évènements de très faible probabilité sans avoir à les observer pour vérifier les performances en précision d'un système de navigation par satellite.

De plus, ce procédé est capable de certifier une performance pour tous les cas de géométrie satellitaire sans recourir à des ressources d'observations gigantesques dans le but d'observer tous les cas de géométrie et l'apparition d'évènements de très faible récurrence.

L'invention sera mieux comprise et d'autres avantages apparaîtront à la lecture de la description qui va suivre donnée à titre non limitatif et grâce aux figures annexées parmi lesquelles :
La figure 1 représente un diagramme de contrôle des performances en précision d'un système de navigation par satellite et le calcul de la probabilité d'erreur en localisation d'un récepteur au regard d'un niveau d'exigence donné.
La figure 2 représente le diagramme de contrôle des performances en précision et le calcul de la probabilité d'obtenir un échantillon dont l'erreur en localisation ne respecte le niveau d'exigence donné.

Les fournisseurs de service exploitant les signaux de radiolocalisation des systèmes de navigation par satellite attendent de ces systèmes, d'une part des performances de plus en plus élevées et d'autre part une continuité de service et des capacités d'alertes permettant d'avertir un utilisateur du service lorsque que les performances ne répondent pas aux exigences attendues. Les solutions de vérification des performances existent actuellement pour le contrôle de l'intégrité d'un système de navigation par satellite quelle que soient les conditions d'observation des signaux pour un utilisateur, mais pour la vérifications des performances en précision, les outils existant ne peuvent pas le garantir dans toutes les conditions d'observation car chaque utilisateur exploite les signaux de radiolocalisation dans une configuration particulière dépendante de sa position, du moment d'observation et de l'état des satellites vus pour calculer sa position.

On rappelle brièvement le principe de localisation des systèmes de navigation par satellite. Dans un système de navigation par satellite, on utilise le temps mis par le signal de radiolocalisation émis par le satellite pour atteindre le récepteur à localiser afin de déterminer la distance, appelée pseudo-distance, entre ce satellite et ce récepteur, le signal contenant les données de position des satellites. A partir du traitement des signaux de radiolocalisation émis par plusieurs satellites vus par un utilisateur, ce dernier est capable de connaître sa position. Plus le nombre de satellite est important et plus la valeur du DOP est faible, alors meilleure est la précision de la position. La précision dépend notamment des paramètres de précision des horloges des satellites, des couches atmosphériques traversées et de la précision des corrections apportées.

Un service de niveau LPV200 exige les performances suivantes. Il est exigé que le système de navigation par satellite montre pendant au moins 95% du temps une erreur de localisation en vertical inférieure à 4 mètres et en horizontal inférieure à 16 mètres. De plus, ce service exige que la probabilité de fournir une erreur de localisation en vertical supérieur à 10 mètres soit inférieure à 10⁻⁷ en condition normale et que la probabilité de fournir une erreur de localisation supérieure à 15 mètres soit inférieure à 10⁻⁵ en condition dégradée. Le niveau de service LPV200 impose un seuil d'alerte en horizontal égal à 40 mètres et un seuil d'alerte en horizontal égal à 35 mètres.

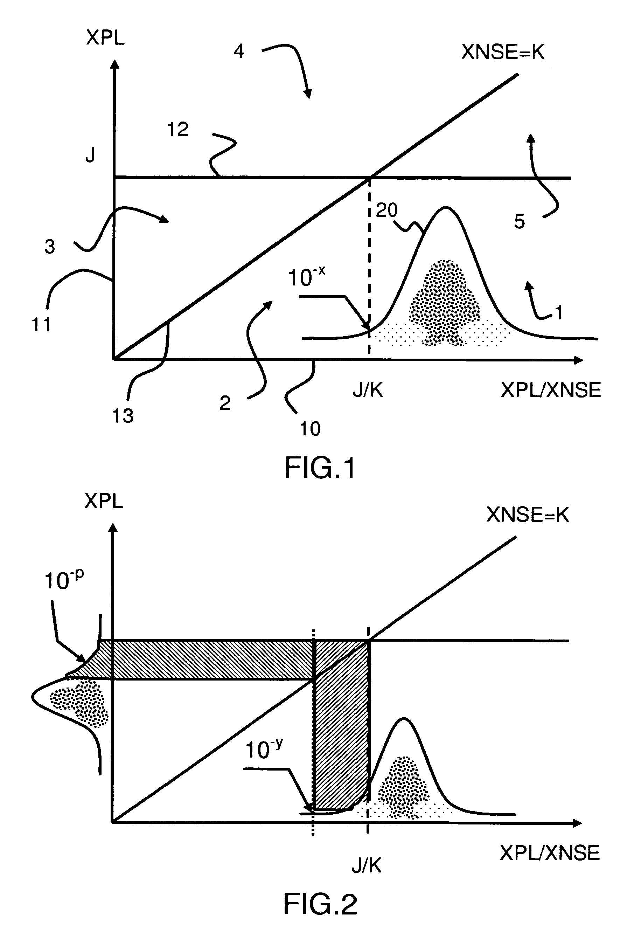

L'invention propose un procédé de calcul des performances en précision quelles que soient les conditions d'observation des signaux de radiolocalisation et le taux de probabilité d'exigence d'observations supérieures à une erreur donnée. Le procédé permet également de configurer tout autre niveau d'exigence en position, en localisation verticale et horizontale. La figure 1 représente graphiquement les calculs réalisés pour déterminer la performance du système de navigation.

La figure 1 représente un diagramme des échantillons de localisation d'un récepteur d'un système de navigation par satellite. Il représente sur un premier axe en horizontal 10 le quotient du seuil d'erreur maximum calculé (communément appelé le rayon de protection et terme que nous utiliserons par la suite par aisance de rédaction) et de l'erreur estimée de localisation, le quotient étant affiché en légende par la référence XPL/XNSE et étant défini dans une dimension d'un repère de position. Si on avait représenté le quotient du rayon de protection et de l'erreur estimée de localisation dans le repère vertical, alors on aurait représenté le quotient par la valeur VPL/VNSE et dans le plan horizontal par HPL/HNSE. Le rayon de protection XPL est obtenu par algorithme de calcul.

Le rayon de protection peut être obtenu selon diverses méthodes qui sont connues de l'homme du métier et le choix de la méthode n'apporte pas dans le cadre de l'invention une limitation de la portée du brevet. Par exemple, le rayon de protection peut être déterminé à partir du niveau d'intégrité du système de navigation par satellite. Le rayon de protection représente les positions possibles dans un plan donné autour de la position réelle, plus exactement on garanti par calcul qu'une position calculée ne pourra pas être localisée au-delà de la position réelle additionnée du niveau de protection dans un plan donné.

L'erreur de localisation estimée XNSE est la différence entre la position réelle d'un récepteur, précisément connue par divers moyens, et la position estimée à partir du traitement des signaux de radiolocalisation émis par les satellites. Par exemple, la position d'une balise de réception de type GBAS (pour « ground-based augmentation system » en langage anglo-saxon) faisant partie d'un système de navigation par satellite est précisément connue. L'erreur estimée de localisation peut être obtenue selon diverses méthodes qui sont connues de l'homme du métier et le choix de la méthode n'apporte pas dans le cadre de l'invention une limitation de la portée du brevet.

Le niveau d'exigence de l'erreur de localisation K correspond à l'erreur de localisation que le système de navigation ne doit pas dépasser durant 95% du temps. Selon la criticité du service, le niveau d'exigence d'erreur peut être de 4, 10 ou 15 mètres. Le niveau d'exigence peut varier selon la dimension du repère de position.

Le diagramme représente sur un second axe 11 en vertical le rayon de protection XPL. Le diagramme représente donc les échantillons de données de localisation positionnés dans le diagramme en horizontal en fonction du quotient du rayon de protection XPL et de l'erreur de localisation XPL et en vertical en fonction du rayon de protection. Le seuil d'alerte J est représenté graphiquement dans le diagramme par la droite 12 et le niveau d'exigence d'erreur estimée K est représenté par la droite 13.

Le procédé de calcul des évènements de faible probabilité consiste à calculer dans un premier temps la proportion d'échantillons dans diverses catégories du diagramme définies dans les paragraphes suivants. On rappelle que la problématique de la mesure de la performance en précision dépend pour chaque utilisateur de la géométrie satellitaire, évaluée par la valeur DOP. L'intérêt de la représentation du diagramme est de pouvoir visualiser la variation de la DOP. Celle-ci se caractérise dans le diagramme par un mouvement vertical des échantillons. Lorsque la valeur de géométrie satellitaire DOP augmente, les échantillons de données se déplacent dans le diagramme verticalement vers le haut. En effet, si la valeur DOP augmente, le rayon de protection augmente mais le quotient XPL/XNSE reste invariant car ne dépend pas de la DOP, dans le domaine des positions le rayon de protection XPL étant égal à la multiplication de la DOP et le facteur d'intégrité et l'erreur de localisation étant égale à la multiplication de la DOP et de l'erreur de pseudo-distance. Si la DOP diminue, le rayon de protection diminue et les échantillons se déplacent verticalement vers le bas.

Une première catégorie 1 calculée par le procédé de vérification comprend les échantillons respectant les deux conditions suivantes : le rayon de protection XPL est inférieur au seuil d'alerte J du service et le quotient XPL/XNSE du rayon de protection et de l'erreur estimée de localisation est supérieur au quotient de sécurité J/K, le quotient de sécurité étant le rapport entre le seuil d'alerte J et un niveau d'exigence d'erreur estimée K. Pour ces échantillons de données, on déduit que lorsque la DOP varie, les échantillons se déplacent verticalement vers le haut en cas de dégradation des conditions de géométrie et vers le bas en cas d'amélioration des conditions de géométrie. Par conséquent, les échantillons localisés dans cette catégorie 1 respectent l'exigence d'erreur de localisation quelle que soit la DOP, et si la DOP se dégrade de sorte que l'exigence d'erreur de localisation K n'est pas respectée, alors les échantillons dépassent obligatoirement le seuil d'alerte J exigé par le service. Cela signifie donc que soit le niveau d'exigence en erreur est respecté et alors on est certain qu'il soit respecté quelle que soit la DOP, soit le niveau d'exigence n'est pas respecté et alors de toute façon le service de navigation n'est pas utilisable car le seuil d'alerte et dépassé. Donc, si pendant 95% du temps les échantillons calculés respectent les conditions de la catégorie 1 dans une condition observée de DOP alors la performance en précision est respectée quelle que soit la condition d'observation de DOP d'un utilisateur. Grâce au procédé on peut donc le déterminer sans avoir à mesurer toutes les conditions d'observation.

Une seconde catégorie 2 comprend les échantillons respectant les trois conditions suivantes : le rayon de protection est inférieur au seuil d'alerte J, le quotient XPL/XNSE du rayon de protection et de l'erreur estimée de localisation est inférieur au quotient de sécurité J/K et l'erreur estimée de localisation XNSE est inférieure au niveau d'exigence d'erreur estimée K. Pour ces échantillons de données, on en déduit que le niveau d'exigence en erreur de localisation est potentiellement respecté. Toutefois, si la valeur DOP augmente, l'erreur de localisation de certains échantillons peut devenir supérieure au niveau d'exigence de l'erreur estimée K alors que dans une condition de valeur DOP initiale l'erreur de localisation était inférieure. En calculant les échantillons dans la catégorie 2, on détermine si la performance en précision est respectée pour des conditions d'observation connue. Cependant, il n'est pas possible de le garantir pour tous les utilisateurs, notamment pour des utilisateurs qui se positionneraient dans des conditions d'observation dégradées par rapport à celles de mesure des échantillons.

Une troisième catégorie 3 comprend les échantillons respectant les trois conditions suivantes : le rayon de protection XPL est inférieur au seuil d'alerte J, le quotient XPL/XNSE du rayon de protection et de l'erreur estimée de localisation est inférieur au quotient de sécurité J/K et l'erreur estimée de localisation est supérieure au niveau d'exigence d'erreur estimée. Pour ces échantillons de données, on en déduit que le niveau d'exigence en erreur de localisation n'est pas respecté. Toutefois, si la valeur DOP diminue, l'erreur de localisation des échantillons peut devenir inférieure au niveau d'exigence de l'erreur estimée K pour certains échantillons alors que dans une condition de valeur DOP initiale l'erreur de localisation était supérieure. En cas de dégradation de la géométrie satellitaire, les performances peuvent devenir telle que le rayon de protection ne respecte plus le seuil d'alerte. Le système de navigation ne doit alors plus être utilisé et l'utilisateur est averti.

Une quatrième catégorie 4 comprend les échantillons respectant les deux conditions suivantes : le rayon de protection XPL est supérieur au seuil d'alerte J et l'erreur estimée de localisation XNSE est supérieure au niveau d'exigence d'erreur estimée K. Pour ces échantillons de données, le rayon de protection XPL est supérieur au seuil d'alerte J. Si la proportion d'échantillon dans cette partie est élevée alors le système de navigation ne doit plus être utilisé car il présente une incertitude de localisation trop dangereuse pour le service utilisateur. Une mauvaise géométrie peut être responsable de ces performances.

Une cinquième catégorie 5 comprend les échantillons respectant les deux conditions suivantes : le rayon de protection XPL est supérieur au seuil d'alerte J et l'erreur estimée de localisation XNSE est inférieure au niveau d'exigence d'erreur estimée K. Si une forte proportion des échantillons est positionnée dans cette catégorie, alors le système de navigation ne peut plus être utilisé car le rayon de protection XPL est supérieur au seuil d'alerte J alors que l'erreur de localisation XNSE respecte le niveau d'exigence K.

Une fois obtenue la distribution des échantillons en localisation parmi les cinq catégories, une étape de calcul est mise en oeuvre afin de modéliser les composantes de la distribution présentant une très faible probabilité d'apparition et qui sont considérées comme inobservables. Ce problème est résolu grâce à la mise en oeuvre de la modélisation par l'application de la théorie des valeurs extrêmes à partir des échantillons observés de la distribution. Le principe de la théorie des valeurs extrêmes consiste à modéliser dans le domaine des probabilités la queue de la distribution des échantillons. La modélisation dépend de paramètres caractéristiques de la distribution. Un calculateur est en charge du traitement des données observées pour calculer la modélisation de la distribution des échantillons, les caractéristiques des moyens de calcul apte à mettre en oeuvre la fonction de modélisation à partir de la théorie des valeurs extrêmes ne limitent pas la portée de l'invention.

La figure 1 représente une distribution 20 d'échantillons. Les extrémités de cette distribution présentent une probabilité d'apparition extrêmement faible. Les niveaux d'exigence requièrent des systèmes qu'ils puissent prouver, par exemple, qu'une probabilité d'une erreur de localisation supérieure à 10 mètres soit inférieure à 10⁻⁷. Pour les échantillons se positionnant dans la catégorie 1, on sait que quelle que soit la géométrie satellitaire et tant que le rayon de protection est inférieur au seuil d'alerte, l'erreur de localisation est inférieure au niveau d'exigence K. Ainsi, la modélisation de la queue de distribution pour les échantillons se positionnant au niveau du quotient de sécurité J/K permet de calculer la probabilité d'avoir des échantillons dont on est sûr du respect du niveau d'exigence en précision.

Dans une première variante d'un système de calcul de la performance illustrée par la figure 1, on calcule la probabilité 10^{-X} associée au quotient de sécurité J/K. Cette valeur permet de calculer la probabilité d'obtenir des échantillons de la distribution ne remplissant pas les conditions de précision imposées par le service utilisateur.

Dans une seconde variante d'un système de calcul de la performance illustrée par la figure 2, la probabilité de distribution des échantillons en fonction du rayon de protection est prise en compte (dans des conditions d'observation des échantillons nominales ou dégradées). Pour cela, on calcule d'une part la probabilité d'obtenir un échantillon dont le quotient XPL/XNSE du rayon de protection et de l'erreur estimée de localisation est inférieur au quotient de sécurité J/K, cette valeur étant égale à 10^{-y}, et d'autre part la probabilité pour que cet échantillon soit localisé dans la catégorie 2 du diagramme, cette probabilité étant égale à 10^{-p}. Le produit de ces deux probabilités permet de déterminer, grâce à la modélisation de la distribution des échantillons de probabilité très faible, la probabilité d'apparition d'un échantillon qui ne satisfait pas aux exigences imposées par le service utilisateur.

L'invention s'applique à tous les systèmes de navigation par satellite, on peut citer par exemple le système américain GPS ("Global Positioning System" en langage anglo-saxon) ou le futur système européen GALILEO, ainsi que les systèmes d'augmentation de performance (EGNOS pour « European Geostationary Navigation Overlay Service »).

## Revendications

1. Procédé de calcul des évènements de faible probabilité pour l'évaluation de la performance en précision d'un système de navigation par satellite comprenant un segment spatial émettant des signaux de radiolocalisation vers un segment récepteur, **caractérisé en ce qu'**il comporte les étapes suivantes :
- Une étape préalable de mesure de l'erreur estimée de localisation d'un récepteur du système pour une pluralité d'échantillons et de calcul du seuil d'erreur maximum de localisation, appelé rayon de protection, pouvant être garanti par le système pour les dits échantillons, l'erreur estimée et le rayon de protection étant définis dans une dimension d'un repère de position,
- Une étape de calcul d'une première proportion (1) d'une distribution d'échantillons vérifiant les conditions suivantes :
i. Le rayon de protection (XPL) est inférieur à un seuil d'alerte (J),
ii. Le quotient du rayon de protection et de l'erreur estimée de localisation (XPL/XNSE) est supérieur à un quotient de sécurité (J/K), le quotient de sécurité étant le rapport entre le seuil d'alerte (J) et un niveau d'exigence d'erreur estimée (K).
- Une étape de calcul d'une seconde proportion (2) de la distribution d'échantillons vérifiant les conditions suivantes :
i. Le rayon de protection (XPL) est inférieur au seuil d'alerte (J),
ii. Le quotient du rayon de protection et de l'erreur estimée de localisation (J/K) est inférieur au quotient de sécurité,
iii. L'erreur estimée de localisation (XNSE) est inférieure au niveau d'exigence d'erreur estimée (K).
- Une étape de calcul de la probabilité de la distribution des échantillons pour lesquels le quotient du rayon de protection et de l'erreur estimée de localisation (XPL/XNSE) est égal au quotient de sécurité (J/K).
- Une étape de modélisation d'au moins une composante de la distribution des échantillons, la composante représentant des échantillons de faible probabilité d'apparition de la distribution et la modélisation étant calculée par application de la théorie des valeurs extrêmes à partir des dits échantillons observés de la distribution.

2. Procédé selon la revendication 1, **caractérisé en ce que**, pour vérifier les performances en précision, il comporte une étape de calcul d'une part de la probabilité d'obtenir un échantillon pour lequel le quotient du rayon de protection et de l'erreur estimée de localisation (XPL/XNSE) soit inférieur au quotient de sécurité (J/K) et d'autre part, pour cet échantillon, de la probabilité que le rayon de protection (XPL) soit inférieur au seuil d'alerte (J) et que l'erreur estimée de localisation (XNSE) soit supérieure au niveau d'exigence d'erreur estimée (K).

3. Système de calcul des évènements de faible probabilité pour l'évaluation de la performance en précision d'un système de navigation par satellite, **caractérisé en ce qu'**il est apte à mettre en oeuvre le procédé selon l'une quelconque des revendications précédentes.

## Claims

1. A method for calculating low likelihood events for assessing the precision performance of a satellite navigation system comprising a space segment emitting radio localisation signals towards a receiving segment, **characterised in that** it comprises the following steps:
- a prior step of measuring the estimated localisation error of a receiver of the system for a plurality of samples and of calculating the maximum localisation error threshold, referred to as the protection radius, that can be guaranteed by the system for said samples, said estimated error and said protection radius being defined in a dimension of a position reference;
- a step of calculating a first proportion (1) of a distribution of samples verifying the following conditions:
i. the protection radius (XPL) is less than an alert threshold (J);
ii. the quotient of the protection radius and the estimated localisation error (XPL/XNSE) is greater than a safety quotient (J/K), the safety quotient being the ratio between the alert threshold (J) and a level of requirement of the estimated error (K);
- a step of calculating a second proportion (2) of the distribution of samples verifying the following conditions:
i. the protection radius (XPL) is less than the alert threshold (J);
ii. the quotient of the protection radius and the estimated localisation error (J/K) is less than the safety quotient,
iii. the estimated localisation error (XNSE) is less than the level of requirement of the estimated error (K);
- a step of calculating the likelihood of the distribution of samples for which the quotient of the protection radius and the estimated localisation error (XPL/XNSE) is equal to the safety quotient (J/K);
- a step of modelling at least one component of the distribution of the samples, said component representing samples with a low likelihood of appearing in the distribution and the modelling being calculated by applying the extreme value theory from said observed samples of the distribution.

2. The method according to claim 1, **characterised in that**, in order to verify the precision performance, it comprises a step of calculating, on the one hand, the likelihood of obtaining a sample for which the quotient of the protection radius and the estimated localisation error (XPL/XNSE) is less than the safety quotient (J/K) and, on the other hand, for this sample, the likelihood that the protection radius (XPL) is less than the alert threshold (J) and that the estimated localisation error (XNSE) is greater than the level of requirement of the estimated error (K).

3. A system for calculating low likelihood events for assessing the precision performance of a satellite navigation system, **characterised in that** it is designed to implement the method according to any one of the preceding claims.

## Patentansprüche

1. Verfahren zum Berechnen von Ereignissen von geringer Wahrscheinlichkeit zum Beurteilen der Präzisionsleistung eines Satellitennavigationssystems, das ein Raumsegment umfasst, das Funkortungssignale zu einem Empfängersegment aussendet, **dadurch gekennzeichnet, dass** es die folgenden Schritte beinhaltet:
- einen Vorabschritt des Messens des geschätzten Ortungsfehlers eines Empfängers des Systems für mehrere Abtastwerte und des Berechnens der maximalen Ortungsfehlerschwelle, Schutzradius genannt, die das System für die Abtastwerte garantieren kann, wobei der geschätzte Fehler und der Schutzradius in einer Dimension einer Positionsreferenz definiert werden,
- einen Schritt des Berechnens einer ersten Proportion (1) einer Abtastwerteverteilung, die die folgenden Bedingungen prüft:
i. der Schutzradius (XPL) ist kleiner als ein Alarmschwellenwert (J),
ii. der Quotient aus Schutzradius und geschätztem Ortungsfehler (XPL/XNSE) ist größer als ein Sicherheitsquotient (J/K), wobei der Sicherheitsquotient das Verhältnis zwischen dem Alarmschwellenwert (J) und einem Anforderungsniveau für den geschätzten Fehler (K) ist;
- einen Schritt des Berechnens einer zweiten Proportion (2) der Abtastwerteverteilung, die die folgenden Bedingungen prüft:
i. der Schutzradius (XPL) ist kleiner als der Alarmschwellenwert (J);
ii. der Quotient aus Schutzradius und geschätztem Ortungsfehler (J/K) ist kleiner als der Sicherheitsquotient,
iii. der geschätzte Ortungsfehler (XNSE) ist kleiner als das Anforderungsniveau für den geschätzten Fehler (K);
- einen Schritt des Berechnens der Wahrscheinlichkeit der Verteilung von Abtastwerten, für die der Quotient aus Schutzradius und geschätztem Ortungsfehler (XPL/XNSE) gleich dem Sicherheitsquotient (J/K) ist;
- einen Schritt des Modellierens von wenigstens einer Komponente der Abtastwerteverteilung, wobei die Komponente Abtastwerte mit einer geringen Wahrscheinlichkeit des Auftretens der Verteilung repräsentiert und wobei die Modellierung durch Anwenden der Extremwerttheorie anhand der beobachteten Abtastwerte der Verteilung berechnet wird.

2. Verfahren nach Anspruch 1, **dadurch gekennzeichnet, dass** es zum Überprüfen der Präzisionsleistungen einen Schritt des Berechnens einerseits der Wahrscheinlichkeit des Erhaltens eines Abtastwertes beinhaltet, für den der Quotient zwischen dem Schutzradius und dem geschätzten Ortungsfehler (XPL/XNSE) kleiner ist als der Sicherheitsquotient (J/K), und andererseits, für diesen Abtastwert, der Wahrscheinlichkeit, dass der Schutzradius (XPL) kleiner ist als der Alarmschwellenwert (J) und der geschätzte Ortungsfehler (XNSE) größer ist als das Anforderungsniveau für den geschätzten Fehler (K).

3. System zum Berechnen von Ereignissen von geringer Wahrscheinlichkeit zum Beurteilen der Präzisionsleistung eines Satellitennavigationssystems, **dadurch gekennzeichnet, dass** es das Verfahren nach einem der vorherigen Ansprüche ausführen kann.
